# EUROPEAN PATENT SPECIFICATION

(11) **EP 2 100 011 B1**
(45) Date of publication and mention of the grant of the patent: **17.07.2013**
(21) Application number: 07848953.1
(22) Date of filing: 28.11.2007
(51) Int. Cl.: F01K 23/06, F01K 27/02, F01K 23/10, F02C 7/36, F02C 3/22, F02C 6/18

(54) **COMBINED-CYCLE PLANT AND ASSOCIATED METHOD FOR GENERATION OF ELECTRICAL ENERGY**
KOMBI-KRAFTWERK UND ASSOZIIERTES VERFAHREN ZUR ERZEUGUNG VON ELEKTRISCHER ENERGIE
CENTRALE À CYCLE COMBINÉ ET PROCÉDÉ ASSOCIÉ POUR LA GÉNÉRATION D'ÉNERGIE ÉLECTRIQUE

(30) Priority: 30.11.2006 IT MI20062314
(43) Date of publication of application: 16.09.2009
(73) Proprietor: ANSALDO ENERGIA S.P.A., 16152 Genova (IT)
(72) Inventor: PRATICÒ, Ferdinando, 16145 Genova (IT); TARTAGLIA, Amedeo, 16012 Busalla (IT)
(74) Representative: Eccetto, Mauro
(86) International application number: PCT/IB2007/003674
(87) International publication number: WO 2008/065517

(56) References cited:
- GB-A- 2 075 125
- JP-A- 2007 023 976
- US-A- 2 613 495
- US-A- 4 057 966
- US-A- 4 932 204

## Description

### TECHNICAL FIELD

The present invention relates to a combined-cycle plant for the production of electrical energy.

In particular, the present invention regards a combined-cycle plant for the production of electrical energy that can be selectively supplied with gases with low calorific power and at a low pressure, in the case in point siderurgical gases generated by a steel plant.

### BACKGROUND ART

Generally, a combined-cycle plant of the type identified above comprises a gas-turbine unit and a steam-turbine unit. The gas-turbine unit comprises: an air compressor; a combustion chamber; and a gas turbine. The combustion chamber can be supplied with siderurgical gases, i.e., mixtures of gases produced in steel plants during the working cycles for the production of steel. The steam-turbine unit comprises, in succession, along the duct for supply of the steam: a condenser; a degasser; and a boiler, which is supplied with the exhaust gases, produced by the combustion that has taken place in the combustion chamber of the gas-turbine unit to carry out recovery of heat from said exhaust gases. A combined-cycle having the above identified structure is disclosed in US patent 4,932,204.

US patent 2,613,495 teaches to evaporate part of the condensed steam by the heat generated in an air compressor and supplying said steam directly to an expansion stage of a steam turbine.

Patent application JP 2007-023976 teaches compressing the fuel, which is burnt partly in the combustion chamber of a gas turbine unit, and partly expanded in a turbine for recovery of part of the energy.

Steel plants comprise: blast furnaces, which generate a gas referred to as BFG (Blast Furnace Gas); electrical converters, which generate a gas referred to as BOFG (Basic Oxygen Furnace Gas); and coke ovens, which generate a gas referred to as COG (Coke Oven Gas).

Siderurgical gases are produced at a pressure slightly higher than atmospheric pressure, whilst the combustion chamber requires that the combustible gas be at a higher pressure. Consequently, siderurgical gases must be compressed by a compression unit, which is actuated by the combined-cycle plant and absorbs a non-negligible part of the power produced by the plant (typically 15-30% of the power generated).

Siderurgical gases have a calorific power that is relatively low as compared to the so-called natural gas, and it is therefore necessary to burn a high amount of siderurgical gases. In addition, since the siderurgical gases are not continuously available, it is necessary for the combustion chamber to be able to be supplied also with natural gas to prevent arrest of the plant and stoppage of production of electrical energy. Supply of the combustion chamber with natural gas (with high calorific power) is used also in the step of start-up of the plant when the plant is not able to function properly burning siderurgical gases.

Compression of siderurgical gases generates, in addition to the increase in pressure, a considerable rise in the temperature of the siderurgical gases, which in effect worsens the efficiency of the compression unit.

In addition, siderurgical gases typically contain an amount of sulphur products (H₂S, COS, etc.) that is sufficiently high as to create problems of corrosion in the end part of the boiler.

In fact, when the aforesaid components of the siderurgical gases are burnt in the combustion chambers of gas turbines and/or in the post-combustions processes that occur in the boilers, they give rise, to a major extent, to S0₂ and, to a minor extent, to SO₃.

When a flow of gas containing SO₃ is cooled below a threshold temperature equal to the Acid Dew Point Temperature increased by 10° C, SO₃ combines with the water vapour present in the fumes, thus giving rise to sulphuric acid H₂SO₄, which is highly corrosive.

With the known solutions, in order to prevent formation of sulphuric acid, an effort is made to avoid cooling of the fumes below the threshold temperature referred to above and/or to avoid having areas within the boiler below said threshold temperature.

In combined cycles, this fact leads to a loss of electrical power that can be produced and a consequent loss of efficiency of the combined-cycle plant, since, in order to prevent problems of corrosion in the first banks of the low-pressure economizer, there typically needs to be introduced the steam that has undergone condensation directly in the degasser, with consequent absorption of steam coming from the outside to guarantee proper degassing of the condensed steam. Obviously, the steam consumed by the degasser would have contributed to producing electrical energy.

In the current state of the art, apart from the advantages that they make possible, combined-cycle plants present various energy losses.

### DISCLOSURE OF INVENTION

The aim of the present invention is to provide a combined-cycle plant that is able to overcome the drawbacks of the known art so as to increase the power and improve the efficiency thereof.

According to the present invention there is provided a combined-cycle plant for the production of electrical energy, the combined-cycle plant comprising:
a gas-turbine unit provided with a combustion chamber;
a steam-turbine unit provided with a degasser, a boiler, and a circuit for supply of the condensed steam to the degasser and, subsequently, to the boiler;
a unit for compression of siderurgical gases for supplying the combustion chamber; and
a duct for conveying the siderurgical gases burnt in the the combustion chamber to the boiler in which a recovery of heat is carried out for heating the condensed steam;
the combined-cycle plant being characterized by comprising a heat-exchange unit for transferring the heat generated by the compression unit to the condensed steam upstream of the degasser in the steam-turbine unit.

Thanks to the present invention the efficiency of the compression unit is improved, any energy dispersions are minimized, and the efficiency of the steam-turbine unit, and in particular of the degasser, is improved. According to a simulation conducted by the present applicant, it emerges that the embodiment of the present invention leads to an improvement of 3% both in the efficiency and in the energy produced by the combined-cycle plant.

The present invention moreover regards a method for the production of electrical energy in a combined-cycle plant.

According to the present invention, a method for the production of electrical energy in a combined-cycle plant is provided, which envisages:
supplying of the combustion chamber of a gas-turbine unit with siderurgical gases compressed by a compression unit;
supplying of condensed steam along a supply circuit to a degasser and, in succession, to a boiler of a steam-turbine unit; and
conveying the siderurgical gases burnt in the combustion chamber to the boiler in which a recovery of heat is carried out for heating the condensed steam;
the method being characterized in that, at least in part, the heat generated by the compression unit is transferred to the condensed steam upstream of the degasser.

According to a particular embodiment of the present invention, the siderurgical gases burnt in the combustion chamber of the gas-turbine unit supply the boiler.

Since the steam that has undergone condensation is pre-heated upstream of the degasser thanks to the heat-exchange unit, there is no risk of reaching temperatures below the threshold temperature in the boiler, and, hence, the problems of corrosion of the boiler are overcome even in the event of the heat of the burnt siderurgical gases being recovered in the boiler.

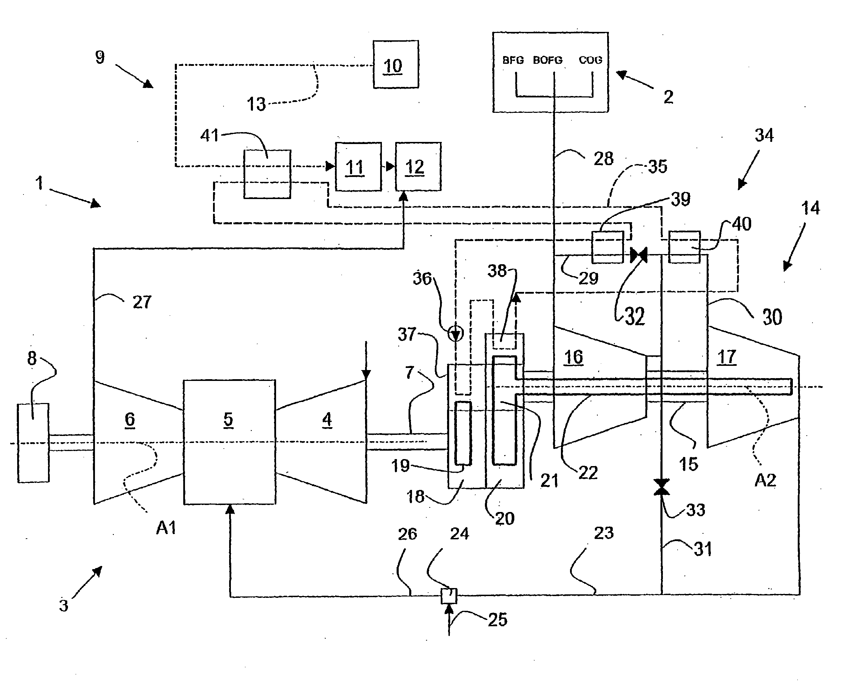

### BRIEF DESCRIPTION OF THE DRAWING

The invention will now be described with reference to the annexed figure, which illustrates a non-limiting example of embodiment thereof, and in particular shows a scheme, with parts removed for reasons of clarity, of a preferred embodiment of the combined-cycle plant forming the subject of the present invention according to the appended claims.

### BEST MODE FOR CARRYING OUT THE INVENTION

In the figure, the reference number 1 designates a combined-cycle plant for the production of electrical energy, which can be supplied both with natural gas and with gases with low calorific power, in the case in point siderurgical gases, in combination with or as alternative to one another. For this reason, the combined-cycle plant 1 is connected to a steel plant for supply of siderurgical gases.

In particular, by the term "siderurgical gases" is meant mixtures of gases produced in the steel plant 2 during the working cycles for the production of steel. Said siderurgical gases are identified, for example, by the acronym BFG (Blast Furnace Gas) if they come from blast furnaces, BOFG (Basic Oxygen Furnace Gas) if they come from electrical converters, or else COG (Coke Oven Gas) if they come from coke ovens.

The combined-cycle plant 1 comprises a gas-turbine unit 3, which in turn comprises: a compressor 4; a combustion chamber 5; a gas turbine 6; and a shaft 7, which can be turned about an axis A1 by the gas turbine 6 to actuate an alternator 8. The plant 1 comprises a steam-turbine unit 9, of which the annexed figure represents only: a condenser 10; a degasser 11; a boiler 12; and a circuit 13 for supplying steam that has undergone condensation from the condenser 10 to the degasser 11, and in succession, to the boiler 12.

According to an embodiment (not illustrated), the degasser 11 can also be integrated with the boiler 12.

The plant 1 comprises a compression unit 14 for compressing the siderurgical gases to an adequate pressure (generally higher than 20 bar) for the needs of the combustion chamber 5 into which they are introduced. The compression unit 14 comprises: a shaft 15 that can turn about an axis A2; two compressors 16 and 17 fitted on the shaft 15; a converter 18 of hydraulic torque, which is designed to transfer selectively the rotary motion from the shaft 7 to the shaft 15 and is provided with a hydraulic circuit 19; a mechanical coupling member 20; a multiplier 21; and a lubrication circuit 22. The converter 18 is able to transfer selectively the motion from the shaft 7 to the shaft 15 according to actuation of the hydraulic circuit 19 supplied with oil, whilst the lubrication circuit 22 is a closed circuit that supplies oil to the mechanical coupling member 20, to the multiplier, to the shaft 15 and to the compressors 16 and 17. According to a variant (not illustrated), the compression unit comprises a number of compressors greater than two, and compression of the siderurgical gases takes place in more than two stages.

The combined-cycle plant 1 comprises a duct 23 for supply of the compressed siderurgical gases from the compression unit 14 to a regulation device 24, in which also the natural gas converges through a duct 25. The regulation device 24 is connected by a duct 26 to the combustion chamber 5 and is able to dose the percentage of siderurgical gas and natural gas supplied to the combustion chamber 5 and to exclude selectively supply both of siderurgical gas and of natural gas.

The gases, whether siderurgical gases, natural gases or a mixture of the two, are burnt in the combustion chamber 5, traverse the turbine 6, and are conveyed through a duct 27 to the boiler 12 in which a recovery of heat is carried out for heating the condensed steam.

The siderurgical gases are supplied to the compression unit 14, in particular to the compressor 16 through a duct 28 by the steel plant 2. The compression unit 14 comprises: a recirculation duct 29, which extends between the outlet of the compressor 16 and the inlet of the compressor 16 itself to re-introduce the siderurgical gases compressed by the compressor 16 to the compressor 16 itself; a duct 30 for supplying the siderurgical gases compressed by the compressor 16 to the second compressor 17; a duct 31 for connecting directly the outlet of the compressor 16 to the duct 23; a valve 32, set along the recirculation duct 29 for partializing or excluding the flow of siderurgical gases; and a valve 33 set along the duct 31 for partializing or excluding the flow of siderurgical gases along said duct 31.

The plant 1 comprises a heat-exchange unit 34 for transferring the heat generated by the compression unit 14 to the steam that has undergone condensation upstream of the degasser 11 in the steam-turbine unit 9. The heat-exchange unit 34 comprises: a closed circuit 35 in which a fluid circulates, in the case in point water; a pump 36, designed to carry out a forced circulation of the water in the circuit 35 in the direction indicated in the annexed figure; a heat-exchanger 37 for transferring the heat of the oil of the hydraulic circuit 19 to the water; a heat-exchanger 38 for transferring the heat generated in the oil of the lubrication circuit 22 to the water; a heat-exchanger 39 for transferring the heat of the siderurgical gases compressed by the compressor 16 and conveyed along the recirculation duct 29 to the water; a heat-exchanger 40 for transferring the heat of the siderurgical gases compressed by the compressor 16 and conveyed along the duct 30 to the compressor 17 to the water; and a heat-exchanger 41 for transferring the heat accumulated during the passage through the heat exchangers 37 to 40 to the vapour that has undergone condensation.

In other words, the pump 36 and the heat exchangers 37 to 41 are arranged along the closed-loop circuit 35, in which the heat exchangers 37 to 40 are provided for transferring the heat generated by the compression unit 14 to the water of the circuit 35, whilst the heat-exchanger 41 is provided for transferring the heat from the water of the circuit 35 to the vapour that has undergone condensation of the circuit 13.

As pointed out previously, the advantages of the present invention are multiple, both from the standpoint of recovery of energy and productivity of the combined-cycle plant 1 and from the standpoint of the improvement of the running conditions of the boiler 12.

## Claims

1. A combined-cycle plant for the production of electrical energy, the combined-cycle plant comprising:
a gas-turbine unit (3) provided with a combustion chamber (5);
a steam-turbine unit (9) provided with a degasser (11), a boiler (12) and a circuit (13) for supply of the condensed steam to the degasser (11) and, subsequently, to the boiler (12);
a unit (14) for compression of siderurgical gases for supplying the combustion chamber (5); and
a duct (27) for conveying the siderurgical gases burnt in the the combustion chamber (5) to the boiler (12) in which a recovery of heat is carried out for heating the condensed steam;
the combined-cycle plant (1) being **characterized by** comprising a heat-exchange unit (34) for transferring the heat generated by the compression unit (14) to the condensed steam upstream of the degasser (11) in the steam-turbine unit (9).

2. The combined-cycle plant according to Claim 1, **characterized in that** the heat-exchange unit (34) comprises a circuit (35) for circulating a heat-exchange fluid.

3. The combined-cycle plant according to Claim 2, **characterized in that** the circuit (35) is a closed circuit.

4. The combined-cycle plant according to Claim 2 or Claim 3, **characterized in that** the heat-exchange unit (34) comprises a pump (36) for feeling the heat-exchange fluid into the circuit (35).

5. The combined-cycle plant according to any one of Claims 2 to 4, **characterized in that** the compression unit (14) comprises a hydraulic converter (18) for connecting the gas-turbine unit (3) kinematically to the compression unit (14); the heat-exchange unit (34) comprising a first heat-exchanger (37) for transferring the heat generated by the hydraulic converter (18) to the heat-exchange fluid.

6. The combined-cycle plant according to any one of Claims 2 to 5, **characterized in that** the compression unit (14) comprises a lubrication circuit (22); the heat-exchange unit (34) comprising a second heat-exchanger (38) for transferring the heat from the lubrication circuit (22) to the heat-exchange fluid.

7. The combined-cycle plant according to any one of Claims 2 to 6, **characterized in that** it comprises at least one third heat-exchanger (39) for transferring the heat from the siderurgical gases compressed by the compression unit (14) to the heat-exchange fluid.

8. The combined-cycle plant according to Claim 7, **characterized in that** the compression unit (14) comprises a first compressor (16) and a second compressor (17) and a recirculation duct (29) for connecting the outlet of the first compressor (16) to inlet of the first compressor (16); the third heat-exchanger (39) being set along the recirculation duct (29) for transferring the heat of the siderurgical gases compressed by the first compressor (16), which are introduced again into the first compressor (16), to the heat-exchange fluid.

9. The combined-cycle plant according to Claim 8, **characterized in that** the compression unit (14) comprises a connection duct (30) set between the outlet of the first compressor (16) and the inlet of the second compressor (17); the heat-exchange unit (34) comprising a fourth heat-exchanger (40) set along the connection duct (30) for transferring the heat from the siderurgical gases, compressed by the first compressor (16) and supplied to the second compressor (17), to the heat-exchange fluid.

10. The combined-cycle plant according to any one of Claims 2 to 9, **characterized by** comprising a fifth heat-exchanger (41) for transferring the heat from the heat-exchange fluid to the condensed vapour.

11. The combined-cycle plant according to Claim 10, cha racterized in that the fifth heat-exchanger (41) is traversed by the circuit (13) for supply of the condensed steam and by the circuit (35) for supply of the heat-exchange fluid.

12. A method for the production of electrical energy in a combined-cycle plant (1) comprising:
supplying the combustion chamber (5) of a gas-turbine plant (3) with siderurgical gases compressed by a compression unit (14);
supplying condensed steam along a supply circuit (13) to a degasser (11) and, in succession, to a boiler (12) of a steam-turbine unit (9); and
conveying the siderurgical gases burnt in the combustion chamber (5)) to the boiler (12) in which a recovery of heat is carried out for heating the condensed steam;
the method being **characterized in that** the heat generated by the compression unit (14) is transferred, at least in part, to the condensed steam upstream of the degasser (11) by means of a heat-exchange fluid.

13. The method according to Claim 12, **characterized by** circulating the heat-exchange fluid in a circuit (35) of the heat-exchange unit for transferring the heat from the compression unit (14) to the circuit (13) for supply of the condensed vapour.

14. The method according to Claim 12 or Claim 13, **characterized by** transmitting motion from the gas-turbine unit (3) to the compression unit (14) by means of a hydraulic converter (18); and in that the heat of the oil of the hydraulic converter (18) is transferred to the heat-exchange fluid by means of a first heat-exchanger (37).

15. The method according to any one of Claims 12 to 14, **characterized by** transferring the heat generated in a lubrication circuit (22) of the compression unit (14) to the heat-exchange fluid by means of a second heat-exchanger (38).

16. The method according to any one of Claims 12 to 15, **characterized by** transferring the heat from the siderurgical gases compressed by the compression unit (14) to the heat-exchange fluid.

17. The method according to Claim 16, **characterized in that** the compression unit (14) comprises a first compressor (16) and a second compressor (17) connected in series; the method envisaging transfer of the heat from the siderurgical gases compressed by the first compressor (16).

18. The method according to Claim 17, **characterized in that** the siderurgical gases at output from the first compressor (16) are re-circulated at inlet to the first compressor (16) and **in that** the heat of the siderurgical gases is transferred to the heat-exchange fluid during the re-circulation step by means of a third heat-exchanger (39).

19. The method according to Claim 17 or Claim 18, **characterized by** supplying the siderurgical gases compressed by the first compressor (16) to the second compressor (17) and transferring the heat of the siderurgical gases, supplied to the second compressor (17), to the heat-exchange fluid by means of a fourth heat-exchanger (40).

20. The method according to any one of Claims 12 to 19, **characterized by** transferring the heat from the heat-exchange fluid to the condensed steam by means of a fifth heat-exchanger (41).

## Patentansprüche

1. Kombikraftwerk für die Erzeugung elektrischer Energie, wobei das Kombikraftwerk umfasst:
eine Gasturbineneinheit (3), die mit einer Verbrennungskammer (5) versehen ist;
eine Dampfturbineneinheit (9), die mit einer Entgasungsvorrichtung (11), mit einem Kessel (12) und mit einem Kreislauf (13) für die Zuführung des kondensierten Dampfes zu der Entgasungsvorrichtung (11) und nachfolgend zu dem Kessel (12) versehen ist;
eine Einheit (14) für die Kompression von siderurgischen Gasen, um diese der Verbrennungskammer (5) zuzuführen; und
einen Leitungskanal (27), um die in der Verbrennungskammer (5) verbrannten siderurgischen Gase zu dem Kessel (12), in dem eine Wärmerückgewinnung für die Erwärmung des kondensierten Dampfes durchgeführt wird, zu befördern;
wobei das Kombikraftwerk (1) **dadurch gekennzeichnet ist, dass** es eine Wärmetauschereinheit (34) umfasst, um die durch die Kompressionseinheit (14) erzeugte Wärme an den kondensierten Dampf stromaufwärts der Entgasungsvorrichtung (11) in der Dampfturbineneinheit (9) zu übertragen.

2. Kombikraftwerk nach Anspruch 1, **dadurch gekennzeichnet, dass** die Wärmetauschereinheit (34) einen Kreislauf (35) für eine Zirkulation eines Wärmeaustauschfluids umfasst.

3. Kombikraftwerk nach Anspruch 2, **dadurch gekennzeichnet, dass** der Kreislauf (35) ein geschlossener Kreislauf ist.

4. Kombikraftwerk nach Anspruch 2 oder 3, **dadurch gekennzeichnet, dass** die Wärmetauschereinheit (34) eine Pumpe (36) umfasst, um das Wärmeaustauschfluid in den Kreislauf (35) einzuspeisen.

5. Kombikraftwerk nach einem der Ansprüche 2 bis 4, **dadurch gekennzeichnet, dass** die Kompressionseinheit (14) einen hydraulischen Wandler (18) umfasst, um die Gasturbineneinheit (3) an die Kompressionseinheit (14) kinematisch anzuschließen; wobei die Wärmetauschereinheit (34) einen ersten Wärmetauscher (37) umfasst, um die von dem hydraulischen Wandler (18) erzeugte Wärme an das Wärmeaustauschfluid zu übertragen.

6. Kombikraftwerk nach einem der Ansprüche 2 bis 5, **dadurch gekennzeichnet, dass** die Kompressionseinheit (14) einen Ölkreislauf (22) umfasst; wobei die Wärmetauschereinheit (34) einen zweiten Wärmetauscher (38) umfasst, um die Wärme von dem Ölkreislauf (22) an das Wärmeaustauschfluid zu übertragen.

7. Kombikraftwerk nach einem der Ansprüche 2 bis 6, **dadurch gekennzeichnet, dass** es mindestens einen dritten Wärmetauscher (39) umfasst, um die Wärme von den siderurgischen Gasen, die von der Kompressionseinheit (14) komprimiert worden sind, an das Wärmeaustauschfluid zu übertragen.

8. Kombikraftwerk nach Anspruch 7, **dadurch gekennzeichnet, dass** die Kompressionseinheit (14) einen ersten Verdichter (16), einen zweiten Verdichter (17) und einen Rückführkanal (29) umfasst, um den Auslass des ersten Verdichters (16) an einen Einlass des ersten Verdichters (16) anzuschließen; wobei der dritte Wärmetauscher (39) entlang des Rückführkanals (29) aufgestellt ist, um die Wärme von den von dem ersten Verdichter (16) komprimierten siderurgischen Gasen, die wieder in den ersten Verdichter (16) eingeführt werden, an das Wärmeaustauschfluid zu übertragen.

9. Kombikraftwerk nach Anspruch 8, **dadurch gekennzeichnet, dass** die Kompressionseinheit (14) einen Verbindungskanal (30) umfasst, der zwischen dem Auslass des ersten Verdichters (16) und dem Einlass des zweiten Verdichters (17) aufgestellt ist; wobei die Wärmetauschereinheit (34) einen vierten Wärmetauscher (40) umfasst, der entlang des Verbindungskanals (30) aufgestellt ist, um die Wärme von den siderurgischen Gasen, die von dem ersten Verdichter (16) komprimiert und dem zweiten Verdichter (17) zugeführt worden sind, an das Wärmeaustauschfluid zu übertragen.

10. Kombikraftwerk nach einem der Ansprüche 2 bis 9, **dadurch gekennzeichnet, dass** es einen fünften Wärmetauscher (41) umfasst, um die Wärme von dem Wärmeaustauschfluid an den kondensierten Dampf zu übertragen.

11. Kombikraftwerk nach Anspruch 10, **dadurch gekennzeichnet, dass** der fünfte Wärmetauscher (41) von dem Kreislauf (13) für die Zuführung des kondensierten Dampfes und von dem Kreislauf (35) für die Zuführung des Wärmeaustauschfluids durchlaufen wird.

12. Verfahren für die Erzeugung elektrischer Energie in einem Kombikraftwerk (1), das umfasst:
Versorgen der Verbrennungskammer (5) einer Gasturbinenanlage (3) mit siderurgischen Gasen, die von einer Kompressionseinheit (14) komprimiert worden sind;
Zuführen von kondensiertem Dampf entlang eines Versorgungskreislaufs (13) zu einer Entgasungsvorrichtung (11) und danach zu einem Kessel (12) einer Dampfturbineneinheit (9); und
Befördern der siderurgischen Gase, die in der Verbrennungskammer (5) verbrannt worden sind, zu dem Kessel (12), in dem eine Wärmerückgewinnung für die Erwärmung des kondensierten Dampfes durchgeführt wird;
wobei das Verfahren **dadurch gekennzeichnet ist, dass** die durch die Kompressionseinheit (14) erzeugte Wärme mindestens teilweise an den kondensierten Dampf stromaufwärts der Entgasungsvorrichtung (11) mittels eines Wärmeaustauschfluids übertragen wird.

13. Verfahren nach Anspruch 12, **dadurch gekennzeichnet, dass** das Wärmeaustauschfluid in einem Kreislauf (35) der Wärmetauschereinheit zirkuliert, um Wärme von der Kompressionseinheit (14) an den Kreislauf (13) für eine Zufuhr des kondensierten Dampfes zu übertragen.

14. Verfahren nach Anspruch 12 oder 13, **dadurch gekennzeichnet, dass** eine Bewegung von der Gasturbineneinheit (3) an die Kompressionseinheit (14) mittels eines hydraulischen Wandlers (18) übertragen wird; und dass die Wärme des Öls des hydraulischen Wandlers (18) an das Wärmeaustauschfluid mittels eines ersten Wärmetauschers (37) übertragen wird.

15. Verfahren nach einem der Ansprüche 12 bis 14, **dadurch gekennzeichnet, dass** die Wärme, die in einem Ölkreislauf (22) der Kompressionseinheit (14) erzeugt worden ist, an das Wärmeaustauschfluid mittels eines zweiten Wärmetauschers (38) übertragen wird.

16. Verfahren nach einem der Ansprüche 12 bis 15, **dadurch gekennzeichnet, dass** Wärme von den siderurgischen Gasen, die von der Kompressionseinheit (14) komprimiert worden sind, an das Wärmeaustauschfluid übertragen wird.

17. Verfahren nach Anspruch 16, **dadurch gekennzeichnet, dass** die Kompressionseinheit (14) einen ersten Verdichter (16) und einen zweiten Verdichter (17), die in Reihe miteinander verbunden sind, umfasst; wobei das Verfahren die Übertragung der Wärme von den siderurgischen Gasen, die von dem ersten Verdichter (16) komprimiert worden sind, vorsieht.

18. Verfahren nach Anspruch 17, **dadurch gekennzeichnet, dass** die siderurgischen Gase am Ausgang von dem ersten Verdichter (16) am Einlass zu dem ersten Verdichter (16) zurückgeführt werden und dass die Wärme während des Rückführungsschritts mittels eines dritten Wärmetauschers (39) von den siderurgischen Gasen an das Wärmeaustauschfluid übertragen wird.

19. Verfahren nach Anspruch 17 oder 18, **dadurch gekennzeichnet, dass** die siderurgischen Gase, die von dem ersten Verdichter (16) komprimiert worden sind, dem zweiten Verdichter (17) zugeführt werden und dass die Wärme der siderurgischen Gase, die dem zweiten Verdichter (17) zugeführt worden sind, mittels eines vierten Wärmetauschers (40) an das Wärmeaustauschfluid übertragen wird.

20. Verfahren nach einem der Ansprüche 12 bis 19, **dadurch gekennzeichnet, dass** Wärme von dem Wärmeaustauschfluid an den kondensierten Dampf mittels eines fünften Wärmetauschers (41) übertragen wird.

## Revendications

1. Centrale à cycle combiné pour la production d'énergie électrique, la centrale à cycle combiné comprenant :
une unité de turbine à gaz (3) pourvue d'une chambre de combustion (5) ; une unité de turbine à vapeur (9) pourvue d'un dégazeur (11), une chaudière (12) et un circuit (13) pour l'alimentation de la vapeur condensée au dégazeur (11) et, par la suite, à la chaudière (12) ;
une unité de compression (14) des gaz sidérurgiques pour alimenter la chambre de combustion (5) ; et
un conduit (27) pour transporter les gaz sidérurgiques brûlés dans la chambre de combustion (5) vers la chaudière (12) où une récupération de chaleur est effectuée pour chauffer la vapeur condensée ;
la centrale à cycle combiné (1) étant **caractérisée par** le fait de comprendre une unité d'échange de chaleur (34) pour transférer la chaleur générée par l'unité de compression (14) à la vapeur condensée en amont du dégazeur (11) dans l'unité de turbine à vapeur (9).

2. Centrale à cycle combiné selon la revendication 1, **caractérisée en ce que** l'unité d'échange de chaleur (34) comprend un circuit (35) pour faire circuler un fluide d'échange de chaleur.

3. Centrale à cycle combiné selon la revendication 2, **caractérisée en ce que** le circuit (35) est un circuit fermé.

4. Centrale à cycle combiné selon la revendication 2 ou 3, **caractérisée en ce que** l'unité d'échange de chaleur (34) comprend une pompe (36) pour alimenter le fluide d'échange de chaleur dans le circuit (35).

5. Centrale à cycle combiné selon l'une quelconque des revendications 2 à 4, **caractérisée en ce que** l'unité de compression (14) comprend un convertisseur hydraulique (18) pour raccorder l'unité de turbine à gaz (3) de manière cinématique à l'unité de compression (14) ; l'unité d'échange de chaleur (34) comprenant un premier échangeur de chaleur (37) pour transférer la chaleur générée par le convertisseur hydraulique (18) au fluide d'échange de chaleur.

6. Centrale à cycle combiné selon l'une quelconque des revendications 2 à 5, **caractérisée en ce que** l'unité de compression (14) comprend un circuit de lubrification (22) ; l'unité d'échange de chaleur (34) comprenant un deuxième échangeur de chaleur (38) pour transférer la chaleur du circuit de lubrification (22) au fluide d'échange de chaleur.

7. Centrale à cycle combiné selon l'une quelconque des revendications 2 à 6, **caractérisée en ce qu'**elle comprend au moins un troisième échangeur de chaleur (39) pour transférer la chaleur des gaz sidérurgiques comprimés par l'unité de compression (14) au fluide d'échange chaleur.

8. Centrale à cycle combiné selon la revendication 7, **caractérisée en ce que** l'unité de compression (14) comprend un premier compresseur (16) et un deuxième compresseur (17) et un conduit de recirculation (29) pour raccorder la sortie du premier compresseur (16) à l'entrée du premier compresseur (16) ; le troisième échangeur de chaleur (39) étant situé le long du conduit de recirculation (29) pour transférer la chaleur des gaz sidérurgiques comprimés par le premier compresseur (16), qui sont de nouveau introduits dans le premier compresseur (16), au fluide d'échange de chaleur.

9. Centrale à cycle combiné selon la revendication 8, **caractérisée en ce que** l'unité de compression (14) comprend un conduit de raccordement (30) situé entre la sortie du premier compresseur (16) et l'entrée du deuxième compresseur (17) ; l'unité d'échange de chaleur (34) comprenant un quatrième échangeur de chaleur (40) situé le long du conduit de raccordement (30) pour transférer la chaleur des gaz sidérurgiques, comprimés par le premier compresseur (16) et alimentés au deuxième compresseur (17), au fluide d'échange de chaleur.

10. Centrale à cycle combiné selon l'une quelconque des revendications 2 à 9, **caractérisée par** le fait de comprendre un cinquième échangeur de chaleur (41) pour transférer la chaleur du fluide d'échange de chaleur à la vapeur condensée.

11. Centrale à cycle combiné selon la revendication 10, **caractérisée en ce que** le cinquième échangeur de chaleur (41) est traversé par le circuit (13) pour l'alimentation de la vapeur condensée et par le circuit (35) pour l'alimentation du fluide d'échange de chaleur.

12. Procédé pour la production d'énergie électrique dans une centrale à cycle combiné (1) comprenant le fait :
d'alimenter la chambre de combustion (5) d'une centrale de turbine à gaz (3) avec des gaz sidérurgiques comprimés par une unité de compression (14) ;
d'alimenter la vapeur condensée le long d'un circuit d'alimentation (13) à un dégazeur (11) et, par la suite, à une chaudière (12) d'une unité de turbine à vapeur (9) ; et
de transporter les gaz sidérurgiques brûlés dans la chambre de combustion (5) vers la chaudière (12) où une récupération de chaleur est effectuée pour chauffer la vapeur condensée ;
le procédé étant **caractérisé en ce que** la chaleur générée par l'unité de compression (14) est transférée, au moins en partie, à la vapeur condensée en amont du dégazeur (11) par l'intermédiaire d'un fluide d'échange de chaleur.

13. Procédé selon la revendication 12, **caractérisé par** le fait de faire circuler le fluide d'échange de chaleur dans un circuit (35) de l'unité d'échange de chaleur pour transférer la chaleur de l'unité de compression (14) au circuit (13) pour l'alimentation de la vapeur condensée.

14. Procédé selon la revendication 12 ou 13, **caractérisé par** le fait de transmettre un mouvement depuis l'unité de turbine à gaz (3) vers l'unité de compression (14) au moyen d'un convertisseur hydraulique (18) ; et en ce que la chaleur de l'huile du convertisseur hydraulique (18) est transférée au fluide d'échange de chaleur au moyen d'un premier échangeur de chaleur (37).

15. Procédé selon l'une quelconque des revendications 12 à 14, **caractérisé par** le fait de transférer la chaleur générée dans un circuit de lubrification (22) de l'unité de compression (14) au fluide d'échange de chaleur au moyen d'un deuxième échangeur de chaleur (38).

16. Procédé selon l'une quelconque des revendications 12 à 15, **caractérisé par** le fait de transférer la chaleur des gaz sidérurgiques comprimés par l'unité de compression (14) au fluide d'échange de chaleur.

17. Procédé selon la revendication 16, **caractérisé en ce que** l'unité de compression (14) comprend un premier compresseur (16) et un deuxième compresseur (17) raccordés en série ; le procédé prévoyant le transfert de la chaleur des gaz sidérurgiques comprimés par le premier compresseur (16) .

18. Procédé selon la revendication 17, **caractérisé en ce que** les gaz sidérurgiques au niveau d'une sortie du premier compresseur (16) sont soumis à une recirculation au niveau d'une entrée au premier compresseur (16) et **en ce que** la chaleur des gaz sidérurgiques est transférée au fluide d'échange de chaleur pendant l'étape de recirculation au moyen d'un troisième échangeur de chaleur (39).

19. Procédé selon la revendication 17 ou 18, **caractérisé par** le fait d'alimenter les gaz sidérurgiques comprimés par le premier compresseur (16) au deuxième compresseur (17) et de transférer la chaleur des gaz sidérurgiques, alimentés au deuxième compresseur (17), au fluide d'échange de chaleur au moyen d'un quatrième échangeur de chaleur (40).

20. Procédé selon l'une quelconque des revendications 12 à 19, **caractérisé par** le fait de transférer la chaleur du fluide d'échange de chaleur à la vapeur condensée au moyen d'un cinquième échangeur de chaleur (41).
